# FASCICULE DE BREVET EUROPEEN

(11) **EP 2 999 342 B1**
(45) Date de publication et mention de la délivrance du brevet: **07.09.2022**
(21) Numéro de dépôt: 14725475.9
(22) Date de dépôt: 22.05.2014
(51) Int. Cl.: A01N 63/00, A01N 25/30, A23L 3/3571, A01P 1/00

(54) **PROCÉDÉ D'AUGMENTATION DE LA DURÉE DE VIE DE DENRÉES PÉRISSABLES**
VERFAHREN ZUR ERHÖHUNG DER HALTBARKEIT VON VERDERBLICHEN WAREN
METHOD FOR INCREASING THE SHELF LIFE OF PERISHABLE GOODS

(30) Priorité: 22.05.2013 BE 201300355
(43) Date de publication de la demande: 30.03.2016
(73) Titulaire: REALCO S.A., 1348 Louvain-la-Neuve (BE)
(72) Inventeur: FASTREZ, Sébastien, B-7000 Mons (BE); BLACKMAN, Gordon, B-1380 Lasne (BE)
(74) Mandataire: Calysta NV
(86) Numéro de dépôt international: PCT/EP2014/060511
(87) Numéro de publication internationale: WO 2014/187889

(56) Documents cités:
- EP-A1- 2 243 821
- WO-A1-92/13807
- WO-A1-96/31133
- WO-A1-98/26807
- WO-A1-2012/048757
- WO-A1-2012/048758
- R. A. N. Chmielewski ET AL: "Biofilm formation and control in food processing facilities", Comprehensive Reviews in Food Science and Food Safety, vol. 2, 20 November 2006 (2006-11-20), pages 22-32, XP55474370,
- Kamila Myszka ET AL: "Bacterial Biofilms on Food Contact Surfaces - a Review", POLISH JOURNAL OF FOOD AND NUTRITION SCIENCES, vol. 61, no. 3, 1 January 2011 (2011-01-01), pages 173-180, XP55474377, PL ISSN: 1230-0322, DOI: 10.2478/v10222-011-0018-4
- R. Van Houdt ET AL: "Biofilm formation and the food industry, a focus on the bacterial outer surface : Biofilm formation and the bacterial outer surface", JOURNAL OF APPLIED MICROBIOLOGY., vol. 109, no. 4, 19 August 2010 (2010-08-19), pages 1117-1131, XP55474364, GB ISSN: 1364-5072, DOI: 10.1111/j.1365-2672.2010.04756.x

## Description

La présente invention se rapporte à une utilisation d'une composition comprenant au moins un composant détergent et au moins un composant enzymatique, pour augmenter la durée de vie de denrées périssables par élimination de biofilms.

Un biofilm est une pellicule visqueuse qui se développe sur toutes les surfaces, suite à l'adhésion de microorganismes sur ces surfaces et à la sécrétion par ceux-ci de polymères qui les recouvrent et facilitent leur adhésion. Les biofilms constituent ainsi une couche de protection autour des microorganismes et représentent une source récurrente de contamination dans de nombreux environnements, par exemple dans les circuits d'eau, les tours de refroidissement, sur tout matériel immergé (coque bateau, ... ) dans les installations de production de denrées périssables, par exemple de production de denrées alimentaires qui, de par leur nature et les dépôts qu'elles occasionnent, génèrent un milieu environnant (ou substrat) particulièrement propice à la mise en place et au développement de biofilms.

Les biofilms résultent de l'accumulation des polymères sécrétés par les bactéries (protéines et polysaccharides principalement), ce qui crée une matrice qui protège ces microorganismes des agressions extérieures et qui présente une très forte résistance aux procédures de nettoyage et de désinfection conventionnels. Les biofilms constituent dès

lors une source de contamination critique car ils sont présents partout, représentant ainsi un haut risque de contamination puisqu'ils sont très difficiles à éliminer.

On observe malheureusement que cette matrice est très résistante et peut constituer une barrière protégeant les bactéries des agents qui agiraient contre les microorganismes. Les traitements classiques à base de soude et/ou comportant différents biocides n'agissent pas de manière suffisamment efficace car ils ne pénètrent pas le biofilm dans toute son épaisseur ou sont inhibés par certaines molécules composant cette matrice. Le traitement n'est alors que partiellement efficace sur la surface supérieure du biofilm.

Or, de nos jours, l'hygiène est devenue une problématique de première importance dans les industries agro-alimentaires. En effet, les problèmes de contamination sont en augmentation alors que les moyens de désinfections utilisés sont de plus en plus puissants. Par ailleurs, cette problématique doit être adressée par une approche globale, notamment en ce qui concerne le phénomène de résistance.

Dans le domaine des industries agro-alimentaires, la problématique de la présence de biofilms est multiple. Premièrement, ceux-ci représentent une source de contamination permanente et très difficile à éliminer par des moyens conventionnels, même les plus agressifs. En effet, les désinfectants classiques sont inefficaces car ils ne parviennent pas à atteindre les microorganismes qui sont protégés par le biofilm. Leur élimination incomplète entraîne et accélère des transferts de contamination.

Deuxièmement, un biofilm est mixte. C'est-à-dire que, développé par certaines souches, un biofilm peut abriter d'autres souches, qui vivent, se développent et cohabitent alors sous forme de colonies (consortium microbien). Ces colonies favorisent la communication entre bactéries (communication via des médiateurs chimiques) mais aussi l'échange de gènes. La propagation des gènes de résistance portés par certaines bactéries est ainsi facilitée au sein des biofilms qui sont alors encore plus difficiles à éliminer. A ce sujet, les installations des industries alimentaires constituent un environnement particulièrement propice à ces échanges de gènes puisque de nombreuses bactéries y cohabitent, par exemple dans sur les plans de travail, dans les frigos mais aussi sur les outils de production (râpes, couteaux, broyeurs, ...). Dans les biofilms, le problème est encore accentué car ces souches ne sont même pas atteintes par les désinfectants, protégées par le matrice du biofilm.

En outre, dans les industries agro-alimentaires, à chaque étape de production, la qualité des produits alimentaires peut être détériorée par les outils de production avec lesquels ces produits sont en contact. En effet, les biofilms constituent bien une source de contamination majeure en industries agro-alimentaires, puisqu'ils se développent aussi bien sur les surfaces ouvertes (plan de travail, outils de découpe,...) que fermées (tuyauterie, échangeurs thermiques, installations membranaires,...), ce qui multiplie les risques de contamination, de réduction de la qualité des produits, de contaminations irrégulières et incontrôlables (rappel de produits, risque de sanitaires,...), de diminution de la productivité et de réduction de la performance des outils de production (colmatage, (bio-) corrosion de surfaces,...).

Actuellement, il n'est pas rare que les industriels soient confrontés à des contaminations de denrées alimentaires à cause de la présence de biofilms, notamment sur les outils de production. Même si les biofilms constituent une couche protectrice des microorganismes, des chocs ou des frottements peuvent faire en sorte que des pellicules de biofilms peuvent se détacher et libérer des bactéries qui y étaient logées, par exemple suite à un choc ou à un frottement d'un outil de production, par exemple un couteau sur un plan de travail ou suite au frottement d'un produit alimentaire lui-même contre un outil de production ou un pian de travail, ce qui permet un libre transfert des bactéries.

On connait de l'art antérieur le document Chmielewski : « Biofilm formation and control in food processing facilities », Compo. Rev. Food Sci. And Food Safety, vol. 2, 20 novembre 2006, qui divulgue une synthèse relative aux biofilms dans l'industrie agroalimentaire, à leur formation et développement.

On connait également le document Myszka : « Bacterial biofilms on food contact surfaces - a review », Polish Journal of Food and Nutrition Sciences, vol. 61, no. 3, 1 janvier 2011, qui divulgue une synthèse relative à la formation, au développement et au contrôle des biofilms dans l'industrie agro-alimentaire.

On connait enfin le document Van Houdt : « Biofilm formation and the food industry », J. Appl. Microbiol., vol. 109, no. 4, 19 août 2010, qui divulgue une synthèse relative aux biofilms dans l'industrie agroalimentaire et plus particulièrement l'utilisation de la nisine permettant une extension de la durée de vie du lait contenu dans des bouteilles PET revêtues de ladite nisine.

Cette problématique est une des causes de la détérioration rapide des produits alimentaires qui sont contaminés avant leur emballage par des microorganismes qui les dégradent rapidement. Il en résulte que les produits alimentaires, même s'ils sont emballés et conditionnés sous atmosphère contrôlée s'altèrent même lorsqu'ils sont conservés dans des conditions optimales, par exemple au frigo.

De telles contaminations dues à des bactéries libérées au départ de biofilms, outre le fait qu'elles réduisent considérablement la durée de vie des produits alimentaires, peuvent même conduire à la destruction de lot de denrées alimentaires, voire même à une altération des outils de production pouvant être colmatés par la présence de biofilms.

Malheureusement, même si la présence de biofilms au sein des industries agro-alimentaires représente un problème conventionnel, les techniques de nettoyage et de désinfection classiques appliquées actuellement montrent certaines limites quant à l'élimination des biofilms, en particulier pour augmenter la durée de vie de denrées alimentaires périssables. Ceci est principalement lié à l'inaptitude des techniques de nettoyage actuelles à attaquer la matrice des polymères qui protège les microorganismes. En effet, les détergents « classiques » ne permettent pas de décoller cette matrice et les oxydants puissants ne la dissolvent que partiellement. Les désinfectants et/ou biocides utilisés à posteriori sont dès lors inefficaces car ils ne peuvent pas atteindre les microorganismes. De plus il a été démontré que les bactéries sécrètent des substances qui ont un impact sur l'efficacité des biocides, ce qui limite d'autant plus l'action de ces derniers.

Actuellement, il est donc particulièrement difficile d'éliminer les bactéries mais aussi les biofilms pourtant en grande partie responsables d'une dégradation rapide des denrées périssables. Les procédures de nettoyage actuelles mais aussi toutes les mesures de précautions mises en œuvre, comme par exemple le port de gants, de

bonnet de protection ou encore de tablier, s'avèrent en effet être insuffisantes même si un seuil de tolérance de contamination bactérienne est toléré dans les industries agro-alimentaires. Toutefois, les croissances exponentielles des colonies bactériennes imposent que ce seuil soit strictement respecté et non dépassé faute de quoi des contaminations trop conséquentes pourraient compromettre toute la ligne de production de denrées périssables. C'est pourquoi il existe un réel besoin de renforcer la lutte contre la présence de bactéries et de biofilms afin d'augmenter la durée de vie des denrées périssables. Plus particulièrement, il existe donc un réel besoin de mettre au point une composition et un procédé d'élimination des biofilms de surfaces telles que par exemple celles des installations de production des denrées périssables pour augmenter la durée de vie des denrées périssables puisque les techniques de nettoyage actuelles et les mesures de précautions ne sont pas suffisamment efficaces.

Par les termes « durée de vie », on entend, au sens de la présente invention, la durée pendant laquelle la conservation d'un produit dans des conditions raisonnablement prévisibles ne permet pas une prolifération microbienne suffisante pour induire un dépassement des critères acceptables pour l'ensemble des germes. Actuellement, il n'existe pas de méthode universelle pour déterminer la durée de vie ou date limite de consommation (DLC). Néanmoins, dans le cadre de la présente invention, la durée de vie est déterminée selon Sa norme AFNOR (NF 01-003).

L'invention a pour but de pallier ces inconvénients en procurant une utilisation d'une composition d'élimination de biofilms comprenant au moins un composant détergent comprenant un agent mouillant et un agent dispersant, et au moins un composant enzymatique contenant au moins une protéase, au moins une laccase et au moins une polysaccharidase, ladite utilisation comportant un traitement de surface d'outils de production ou installation de convoyage et/ou de production et/ou de conditionnement, avec lesquels des denrées périssables entrent en contact, pour augmenter la durée de vie de ces denrées périssables jusqu'à 50%, de préférence jusqu'à 60%, préférentiellement jusqu'à 75%.

Avantageusement, suivant l'invention, ledit composant détergent comprend un agent mouillant et un agent dispersant.

De préférence, suivant l'invention, ledit composant détergent comprend en outre un agent séquestrant.

Préférentiellement, suivant l'invention, ledit au moins un composant enzymatique contient par exemple au moins une protéase, au moins une laccase et au moins une polysaccharidase.

Dans le cadre de la présente invention, il a été montré que, suite à la détection de la présence de biofilm, par exemple à l'aide d'un kit de détection tel que décrit dans le document EP 2537601, un tel traitement avec une telle composition selon l'invention permet aux enzymes (protéases, laccases, polysaccharidases) de dégrader efficacement et de manière polyvalente les polymères organiques de différentes natures constituant la matrice des biofilms formés par une multitude de microorganismes différents responsables directement ou indirectement d'une dégradation rapide des denrées périssables, ce qui en réduit considérablement la durée de vie.

Sous l'action des enzymes et conjointement à l'action du composant détergent, la matrice du biofilm est fragilisée et gonflée, ce qui permet de l'éliminer de la surface traitée. Par ailleurs, de façon surprenante, il a également été montré que le procédé selon l'invention n'est pas spécifique à un microorganisme particulier et donc à un type de biofilm particulier mais qu'il est adapté à de nombreuses souches bactériennes, les enzymes agissant sur les polymères des matrices des biofilms formés par n'importe quel microorganisme.

L'action détergente de la composition selon l'invention permet en outre d'assurer l'efficacité de la composition suivant l'invention. A cette fin, il est prévu suivant l'invention une base détergente qui soit compatible et qui puisse agir de manière synergique avec l'activité enzymatique du composant enzymatique. En outre, suivant l'invention, il est prévu une base détergente qui permette d'améliorer significativement la rapidité et l'efficacité de l'élimination du biofilm. C'est pour ces raisons que la présente invention associe un agent mouillant et un agent dispersant et éventuellement un agent séquestrant. Les actions conjointes de ces agents du composant détergent de la composition selon l'invention permet d'éliminer la partie superficielle du biofilm, de mouiller et de gonfler les structures organiques du biofilm favorisant donc de cette façon l'accessibilité du composant enzymatique qui fragilise et dégrade à son tour la matrice du biofilm.

De façon tout aussi inattendue, il a été déterminé, dans le cadre de la présente invention, qu'un tel traitement agit efficacement sur les microorganismes responsables de la dégradation des denrées périssables. Contre toute attente, il a été montré que le traitement suivant l'invention permet non seulement d'éliminer les biofilms mais aussi de limiter très significativement la prolifération des bactéries inhérentes aux denrées périssables. En effet, suite à l'élimination des biofilms, il a été déterminé, dans le cadre de la présente invention, que la présence de bactéries propres aux denrées alimentaires (et donc non protégées par un biofilm) est également réduite de façon conséquente, ce qui contribue largement à augmenter la durée de vie des denrées alimentaires. De fait, il a été démontré que les biofilms essentiellement constitués de polysaccharides et de protéines constituent un substrat nutritif de prédilection particulièrement adéquat pour les bactéries inhérentes aux denrées périssables, une élimination des biofilms contribuant donc à limiter significativement le développement et la prolifération des bactéries inhérentes aux produits alimentaires telles que par exemple les salmonelles.

Une élimination du substrat que forment les biofilms permet donc de réduire fortement la présence de ces bactéries issues des denrées périssables elles-mêmes. Par conséquent, un environnement plus propre avec nettement moins de contaminants est obtenu selon le procédé de la présente invention, ce qui permet d'augmenter considérablement la durée de vie des denrées périssables. En effet, des résultats nettement et significativement supérieurs sont obtenus en termes d'élimination des biofilms et des bactéries inhérentes aux denrées périssables, et donc en termes d'augmentation de la durée de vie des denrées périssables, par rapport aux techniques de traitement actuellement appliquées en milieux agro-alimentaires.

De préférence, selon l'utilisation suivant l'invention, ladite étape de traitement de surface pour augmenter la durée de vie de denrées périssables comprend une étape d'élimination des biofilms permettant d'augmenter la durée de vie de denrées périssables d'au moins 5%, de préférence d'au moins 10%, préférentiellement d'au moins 20%. Selon l'invention, la durée de vie peut être augmentée jusqu'à 50%, de préférence jusqu'à 60%, préférentiellement jusqu'à 75%.

De préférence, selon l'utilisation suivant l'invention, ladite étape de traitement de surface est réalisée par application, pendant une période de temps prédéterminée comprise entre 1 minute et 1 heure, de préférence comprise entre 3 minutes et 30 minutes, d'une solution comprenant ladite composition et une phase aqueuse de dilution préalablement formée. Un tel traitement est particulièrement indiqué pour nettoyer des surfaces ou des outils de production (râpes, couteaux, broyeurs,... ).

Avantageusement, selon l'invention, ladite étape de traitement de surface est associée à une étape d'abrasion mécanique de ladite surface, par exemple par brossage mécanisé ou manuel ou encore par application d'un rinçage à moyenne ou à haute pression. Une étape d'abrasion mécanique additionnelle permet à la solution comprenant ladite composition en phase aqueuse d'agir sur les différentes couches des biofilms mais aussi de participer mécaniquement à la déstructuration de la matrice polymère et ainsi ôter des pellicules de la surface des biofilms pour que les enzymes et les autres composants de ladite composition atteignent encore mieux les différentes couches des biofilms, ce qui assure un traitement optimal des surfaces afin d'éliminer efficacement les biofilms.

De préférence, selon l'utilisation suivant l'invention, le pH de ladite solution est ajusté à une valeur de pH comprise entre 7 et 8.

De préférence, selon l'invention, l'utilisation comprend en outre une étape supplémentaire ultérieure de traitement de ladite surface à l'aide d'un biocide. Un traitement biocide désinfectant additionnel, suite à l'action de la solution enzymatique lors de l'étape de traitement de surface par trempage, permet d'assurer la destruction des bactéries rendues libres en fin de traitement de ladite surface.

D'autres formes de réalisation l'utilisation suivant l'invention sont indiquées dans les revendications annexées.

La présente invention porte également sur une nouvelle utilisation d'une composition comprenant au moins un composant détergent et au moins un composant enzymatique, pour augmenter la durée de vie de denrées périssables par élimination de biofilms. Une élimination des biofilms par application de la composition diluée permet de lutter efficacement contre les bactéries responsables de la dégradation des denrées périssables puisque les composants enzymatiques de la solution aqueuse permettent de déstructurer et d'éliminer les biofilms des surfaces traitées de telle sorte que les biofilms, en grande partie responsables de la dégradation des denrées périssables, sont éliminés.

Cette action des enzymes est favorisée par le fait qu'elle a lieu en synergie avec l'action du composant détergent de la composition selon l'invention, lequel permet d'éliminer la partie superficielle du biofilm, de mouiller et de gonfler les structures organiques du biofilm et de favoriser ainsi l'accessibilité du composant enzymatique qui fragilise et dégrade à son tour la matrice du biofilm.

De préférence, selon l'invention, ledit composant détergent de la composition utilisée comprend un agent mouillant et un agent dispersant.

Avantageusement, selon l'invention, ledit composant détergent de la composition utilisée comprend en outre un agent séquestrant.

De préférence, selon l'invention, ledit composant enzymatique de la composition utilisée contient par exemple au moins une protéase, au moins une laccase et au moins une polysaccharidase.

Plus particulièrement, la présente invention porte sur une utilisation d'une composition comprenant au moins un composant détergent comprenant un agent mouillant et un agent dispersant et éventuellement un agent séquestrant, et au moins un composant enzymatique contenant au moins une protéase, au moins une laccase et au moins une polysaccharidase, pour l'élimination de sources de contamination comprenant Listeria monocytogenes et/ou Bacillus cereus et/ou Bacillus mycoïdes et/ou Pseudomonas aeruginosa et/ou Pseudomonas fluorescens. Ces bactéries se développent particulièrement bien dans les milieux retrouvés dans les industries agro-alimentaires et favorisent significativement la dégradation des denrées périssables qui, par conséquent, ne peuvent être conservées qu'un court laps de temps.

L'invention porte aussi sur une utilisation d'une composition comprenant au moins un composant détergent et au moins un composant enzymatique, pour le traitement de surfaces, d'outils de production, d'installations de convoyage et/ou de production et/ou de conditionnement pour augmenter la durée de vie de denrées alimentaires.

De préférence, ledit composant détergent de ladite composition utilisée comprend un agent mouillant et un agent dispersant.

Avantageusement, ledit composant détergent de ladite composition utilisée comprenant en outre un agent séquestrant.

Préférentiellement, ledit composant enzymatique de ladite composition utilisée contient par exemple au moins une protéase, au moins une laccase et au moins une polysaccharidase.

D'autres formes de réalisation d'utilisation d'une composition par trempage suivant l'invention sont indiquées dans les revendications annexées.

Le composant détergent comprenant un agent mouillant et un agent dispersant et éventuellement un agent séquestrant agit tout d'abord en éliminant une partie superficielle du biofilm et en mouillant et/ou en gonflant les structures organiques du biofilm.

Le composant détergent favorise donc l'accessibilité du composant enzymatique en déstructurant la matrice du biofilm. Le composant enzymatique agit ensuite en synergie avec le composant détergent et fragilise et dégrade à son tour la matrice du biofilm. Cette action combinée des trois types d'enzyme et du composant détergent, parfaitement compatible avec une action correcte des enzymes, favorise l'accessibilité à la composition des couches plus profondes et permet un détachement rapide et optimal de tout type de biofilm tout en préservant le substrat. Une telle composition suivant l'invention réduit en outre l'apport de composés extérieurs dans les installations lors de l'étape de nettoyage et simplifie donc les procédures de validation des étapes de nettoyage. Ainsi, le composant détergent permet aux enzymes d'agir rapidement sur l'ensemble des structures des biofilms, ce qui, en milieu agro-alimentaire où une production rapide à la chaîne est d'application, représente un avantage certain.

L'agent dispersant du composant détergent permet d'améliorer la séparation des particules d'une suspension afin de prévenir l'agglutination, l'agrégation et/ou la décantation. Ledit agent dispersant peut être un polymère soluble ou partiellement soluble dans l'eau tel que par exemple le polyéthylène glycol, les dérivés de la cellulose ou un polymère comprenant au moins un motif acide acrylique ou ester acrylique. Préférentiellement, l'agent dispersant est un polymère comprenant au moins un motif acide acrylique ou ester acrylique de formule générale -(CH2-CH-COOR)- dans lequel R représente un groupe hydrogène, alkyle ou alkyle substitué, aryle ou aryle substitué. En particulier l'agent dispersant est un polymère ayant un poids moléculaire moyen Mw compris approximativement entre 500 et 10000.

Plus préférentiellement, l'agent dispersant est un polymère de l'acide acrylique. En particulier, l'agent dispersant peut être un homopolymère de l'acide acrylique ayant un poids moléculaire moyen compris approximativement entre 2000 et 6000.

Dans une variante avantageuse selon l'invention, le composant détergent comprend une proportion l'agent dispersant comprise entre 1 et 10% en poids par rapport au poids totai du composant détergent.

Plus particulièrement, selon la présente invention, ledit agent dispersant dudit composant détergent est l'alkylglucoside en C6.

La présence d'un agent dispersant dans la composition suivant l'invention pour éliminer les biofilms et augmenter la durée de vie de denrées périssables (par exemple des denrées alimentaires) permet d'éviter toute agrégation de particules bactériennes lors du nettoyage de surfaces, ce qui assure une élimination optimale des particules de biofilms détachées d'un support sous l'action des enzymes. En effet, plutôt que de s'agréger, ces particules restent séparées dans une suspension, ne se redéposent pas et ne ré-adhèrent pas sur le support nettoyé.

L'agent mouillant du composant détergent est une substance chimique amphiphile, ou une composition comprenant ladite substance chimique amphiphile, qui modifie la tension superficielle entre deux surfaces. L'agent mouillant a pour avantage de favoriser l'étalement d'un liquide sur un solide mais aussi d'accentuer le contact entre deux surfaces. Plus particulièrement, l'agent mouillant favorise un contact entre le composant détergent et une surface et, par conséquent, entre les enzymes et leur substrat. Or, dans les industries agro-alimentaire, les surfaces à traiter sont souvent en inox ou en un matériau sur lequel l'application d'un liquide donne lieu à la formation de gouttelettes. Cette caractéristique des surfaces à traiter rend difficile une application homogène d'une composition sous forme liquide pour lutter contre la présence de biofilms. C'est pourquoi, l'agent mouillant est un constituant particulièrement avantageux de ladite composition selon l'invention puisqu'il permet, même sur des surfaces de type inox, un étalement homogène de la composition et ainsi sa répartition parfaite sur les surfaces à décontaminer, par exemple sur les outils de production, les plans de travail et les sols.

L'agent mouillant peut être anionique, cationique, non-ionique ou zwitterionique. Préférentiellement, l'agent mouillant peut être un mouillant anionique ou non-ionique, c'est-à-dire que la partie hydrophile est chargée négativement ou ne comporte aucune charge nette, ou peut être une composition comprenant un mouillant anionique. Plus particulièrement, l'agent mouillant peut être un ester de saccharose ou une composition comprenant un alkyle sulfate de sodium et un alcool.

L'agent mouillant peut être moussant ou non moussant. De préférence, dans le composant détergent selon l'invention, ledit agent mouillant est non moussant à chaud et est de préférence choisi dans le groupe des sulfates d'alkyle sodique en C₆ à C₁₀, des sulfates d'alcool éthérés en C₆ à C₁₀ et des sulfonates d'alkylearyles en C₆ à C₁₀.

Plus particulièrement, selon la présente invention, ledit agent mouillant dudit composant détergent est le 2-éthylhexanol éthoxylé.

Le fait que l'agent mouillant soit non moussant à chaud permet une utilisation de la composition suivant l'invention pour le traitement d'outils de production présentant des tuyaux ou des tubulures. En effet, l'agent mouillant étant non moussant, ceci permet d'éviter la formation de mousse, sans altérer, bien au contraire, les performances tensioactives et/ou émulsionnantes de la composition selon l'invention. Il est bien entendu que l'apport d'une solution détergente efficace sans génération de mousse limite les étapes de rinçage, ce qui est particulièrement souhaitable, surtout pour les outils de production présentant des tuyaux qui peuvent ainsi être réutilisés rapidement.

Dans une forme de réalisation selon l'invention, le composant détergent comprend une proportion d'agent mouillant comprise entre 1 et 15% en poids par rapport au poids total du composant détergent.

L'agent séquestrant est une substance chimique ayant la capacité à former des complexes avec des ions minéraux qu'il fixe sous une forme empêchant leur précipitation par les réactions habituelles. A titre d'exemple, l'agent séquestrant peut être l'acide éthylène-diamine-tétraacétique, le glucono-delta-lactone, le gluconate de sodium, le gluconate de potassium, le gluconate de calcium, l'acide citrique, l'acide phosphorique, l'acide tartrique, l'acétate de sodium, le sorbitol, un composé comportant un atome de phosphore. Préférentiellement, l'agent séquestrant peut être un oxyde de phosphore tel qu'un phosphonate, un phosphinate ou un phosphate ou leur mélange, ou un sel de celui-ci, une aminé ou un oxyde d'amine portant au moins, dans sa structure, un groupement fonctionnel phosphine, oxyde de phosphine, phophinite, phosphonite, phosphite, phosphonate, phosphinate ou phosphate, seul ou en combinaison, ou un sel de ceux-ci.

Avantageusement, l'agent séquestrant est une substance chimique compatible avec les substances alimentaires, par exemple, l'agent séquestrant est préférentiellement un agent non toxique pour la santé humaine.

Plus préférentiellement, l'agent séquestrant peut être un phosphonate ou un sel de celui-ci, une aminé ou un oxyde d'amine comportant au moins, dans sa structure, un groupement fonctionnel phosphine, oxyde de phosphine, phosphinite, phosphonite, phosphite, phosphonate, phosphinate ou phosphate, seul ou en combinaison, ou un sel de ceux-ci. A titre d'exemple non limitatif, le phosphonate peut être de formule générale R¹(R²O)(R³O)P=O dans lequel R¹, R² et R³ représentent indépendamment un groupe hydrogène, alkyle, alkyle substitué, alkyle-amino substitué ou non, aminoalkyl substitué ou non, aryle ou aryle substitué. A titre d'exemple non limitatif, l'aminé ou l'oxyde d'amine peuvent comporter un, deux ou trois substituant(s) de formule générale CR⁴R⁵W dans laquelle R⁴ et R⁵ représentent indépendamment l'un de l'autre un groupe hydrogène, alkyle, alkyle substitué, alkyle-amino substitué ou non, aminoalkyl substitué ou non, aryle ou aryle substitué, et W représente un groupe phosphonate, phosphinate ou phosphate.

L'agent séquestrant peut être sous la forme d'un sel de sodium, calcium, lithium, magnésium ou potassium ; préférentiellement, l'agent séquestrant peut être sous la forme d'un sel de sodium, calcium ou potassium.

De préférence, l'agent séquestrant est un agent qui peut être utilisé sans danger dans le secteur alimentaire, c'est-à-dire que l'agent séquestrant ne présente aucun danger pour la santé, seul ou en association avec d'autres composants.

Plus particulièrement, suivant l'invention, ledit agent séquestrant dudit composant détergent est un sel de potassium à base d'acide phosphonique modifié (N-oxyde ATMP).

Dans une forme de réalisation avantageuse selon l'invention, ledit au moins un composant détergent comprend une proportion d'agent séquestrant comprise entre 1 et 10% en poids par rapport au poids total du composant détergent, ce qui représente un optimum entre efficacité, stabilité et coût.

De préférence, ledit au moins un composant enzymatique comprend une proportion de protéase(s) comprise entre 10 et 50%, une proportion de laccase(s) comprise entre 5 et 35% et une proportion de polysaccharidase(s) comprise entre 5 et 20% en poids par rapport au poids total du composant enzymatique, les 100% du composant enzymatique étant éventuellement atteints à l'aide d'un excipient ou solvant conventionnel, par exemple un alcool.

Le composant enzymatique selon l'invention présente l'avantage d'être polyvalent, c'est-à-dire qu'il peut agir simultanément sur diverses souches bactériennes, ce qui est particulièrement avantageux au niveau des industries agro-alimentaires où de nombreuses souches bactériennes différentes se développent simultanément.

Selon un mode de réalisation préféré de l'invention, le composant enzymatique peut contenir entre 1 et 10 protéases, préférentiellement entre 1 et 5 protéases, plus préférentiellement il peut contenir 2, 3, 4 ou 5 protéases.

Des exemples non limitatifs d'enzymes protéases appartenant à la classe EC 3.4 et susceptibles d'être utilisées dans l'invention sont les amino-peptidases (EC 3.4.11), les dipeptidases (EC 3.4.13), les dipeptidyl-peptidases et tripeptidyl-peptidases (EC 3.4.14), les peptidyl-dipeptidases (EC 3.4.5), les sérine carboxypeptidases (EC 3.4.16), les métallo carboxypeptidases (EC 3.4.17), les cystéine carboxypeptidases (EC 3.4.18), les oméga peptidases (EC 3.4.19), les sérine endopeptidases (EC 3.4.21), les cystéine endopeptidases (EC 3.4.22), les aspartique endopeptidases (EC 3.4.23), les métallo endopeptidases (EC 3.4.24), les thréonine endopeptidases ((EC 3.4.25), et les endopeptidases appartenant à la classe EC 3.4.99.

Préférentiellement, les protéases appartiennent à la classe EC 3.4.21. Les protéases sont disponibles commercialement et sous différentes formes incluant les poudres, les granulés, les suspensions, les solutions liquides.

Les laccases utilisées dans l'invention appartiennent à la classe EC 1.10.3.2. Les laccases sont des enzymes contenant du cuivre et ont pour fonction d'oxyder un substrat en présence d'oxygène. Plus spécifiquement, les laccases sont des oxydoréductases qui fonctionnent avec l'oxygène moléculaire comme accepteur d'électrons.

La au moins une polysaccharidase utilisée dans l'invention est une enzyme ayant pour fonction de briser des liaisons au sein des polysaccharides. Préférentiellement, la au moins une polysaccharidase peut être une alpha-amylase, cellulase, hemi-cellulase, glucosidase, beta-glucanase ou pectinase.

Plus préférentiellement, la au moins une polysaccharidase peut être une alpha-amylase appartenant à la classe EC 3.2.1.1, ayant pour fonction de briser des liens (1-4)-alpha-glycosidiques dans des polysaccharides contenant trois unités ou plus alpha-(1 -4)-D-glucose.

Préférentiellement, le composant enzymatique peut comprendre une proportion de laccase(s) approximativement de 30%, une proportion de protéase(s) approximativement de 30%, une proportion d'alpha-amylase(s) approximativement de 10% en poids par rapport au poids total du composant enzymatique, les 100% du composant enzymatique étant éventuellement atteints à l'aide d'un excipient ou solvant conventionnel.

Selon un autre mode de réalisation préféré, si le composant enzymatique comprend 2 protéases, la proportion de laccase(s) peut être approximativement de 30%, la proportion totale de protéases approximativement de 30%, la proportion d'alpha-amylase(s) approximativement de 10% en poids par rapport au poids total du composant enzymatique, les 100% du composant enzymatique étant éventuellement atteints à l'aide d'un excipient ou solvant conventionnel.

Par exemple, le rapport entre chaque protéase peut être compris entre 1:2 et 2:1, préférentiellement le rapport entre chaque protéase peut être de 1:1. Les enzymes présentes dans le composant enzymatique ont une action complémentaire sur le biofilm. Par exemple, la laccase présente une grande efficacité sur les souillures non attaquées par l'alpha-amylase ou les protéases. Comme mentionné plus haut, le composant enzymatique, de par la présence simultanée d'au moins trois types de d'enzymes, est polyvalent et peut agir en même temps sur divers types de biofilms produits par diverses souches bactériennes, ce qui est essentiel en milieu agro-alimentaire.

Selon un mode de réalisation préféré de l'invention, le composant enzymatique peut être une solution ou sous forme solide.

Préférentiellement, le composant enzymatique est une solution dont le pH peut être compris approximativement entre 8 et 10. Préférentiellement, le composant enzymatique est une solution aqueuse dont le pH peut être compris approximativement entre 8,5 et 9,5 ; plus préférentiellement le pH peut être approximativement de 9,0, et ceci pour préserver au maximum l'intégrité des enzymes.

Alternativement, le composant enzymatique peut être sous forme solide tel que par exemple sous forme d'un lyophilisât, de poudres, de granulés ou sous tout autre forme permettant la solubilisation dudit composant dans un solvant, puis il sera ultérieurement dissous dans ledit solvant. Le solvant peut être de l'eau ou une solution aqueuse, acide, basique, alcoolique, tamponnée ou neutre. Le composant enzymatique solubilisé pourra alors dans ce cas être ultérieurement dilué dans une solution aqueuse contenant éventuellement un ou plusieurs composés tels que par exemple des détergents pour former la solution de nettoyage.

Comme pour le composant enzymatique, le composant détergent peut être sous forme solide à dissoudre dans un solvant et/ou dans une phase aqueuse ou sous forme liquide.

Lorsqu'il est sous forme solide, il peut soit être mis directement en solution dans la solution formée par le composant enzymatique éventuellement déjà dilué dans la phase aqueuse, soit être mis en solution dans un solvant, préalablement à sa dilution dans la solution formée par le composant enzymatique et la phase aqueuse, ou dans la phase aqueuse directement, avant la dilution du composant enzymatique.

Lorsque le composant détergent est sous forme liquide, les 100% du composant détergent sont éventuellement atteints généralement à l'aide d'eau et, préalablement à l'application sur le biofilm, ii sera dilué dans une phase aqueuse, contenant éventuellement déjà le composant enzymatique.

Eventuellement, selon le procédé de la présente invention, le pH de ladite solution est ajusté à une valeur de pH comprise entre 6,5 et 7,5, plus particulièrement autour de 7.

Alternativement, ladite composition peut être sous forme solide puis être dissoute avant utilisation dans un solvant afin d'obtenir, lorsqu'elle sera diluée dans une phase aqueuse avant application sur un biofilm, une solution dont le pH est compris approximativement entre 7 et 8. Dans une variante avantageuse selon l'invention, la composition est une solution prévue pour, lorsqu'elle est diluée dans une phase aqueuse avant application sur le biofilm, former une solution présentant un pH compris approximativement entre 6,5 et 7,5, plus particulièrement d'environ 7. De cette façon, le pH de la solution de la composition est particulièrement approprié à l'action du composant enzymatique, en particulier de la laccase.

Alternativement, ladite composition peut être sous forme solide puis être dissoute avant utilisation dans un solvant afin d'obtenir une solution qui sera ensuite diluée dans une phase aqueuse pour obtenir une solution de nettoyage dont le pH est compris approximativement entre 6,5 et 7,5, de préférence d'environ 7.

Selon le procédé de la présente invention, l'entièreté de la matrice des biofilms est éliminée, le traitement de surface selon l'invention ne laissant subsister que des bactéries « nues », c'est-à-dire des bactéries dépourvues de toute protection et qui peuvent ainsi être facilement éliminées en totalité lors d'une utilisation ultérieure d'un biocide, comme expliqué ci-après après rinçage de la composition.

Comme mentionné plus haut, la composition suivant l'invention comprend un composant détergent qui favorise l'action des enzymes en leur permettant d'atteindre rapidement les couches inférieures des biofilms et pas uniquement leur couche supérieure. Les enzymes peuvent donc agir très rapidement sur l'ensemble de ia structure des biofilms et ainsi mettre toutes les bactéries à nu non seulement à la surface des biofilms mais aussi au niveau des couches inférieures qui les constituent.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Utilisation d'une composition d'élimination de biofilms comprenant au moins un composant détergent comprenant un agent mouillant et un agent dispersant, et au moins un composant enzymatique contenant au moins une protéase, au moins une laccase et au moins une polysaccharidase, ladite utilisation comportant un traitement de surface, d'outils de production ou installation de convoyage et/ou de production et/ou de conditionnement, avec lesquels des denrées périssables entrent en contact, pour augmenter la durée de vie de ces denrées périssables jusqu'à 50%, de préférence jusqu'à 60%, préférentiellement jusqu'à 75%.

2. Utilisation selon la revendication 1, dans laquelle ledit composant détergent comprend en outre un agent séquestrant.

3. Utilisation suivant l'une quelconque des revendications 1 ou 2, dans laquelle ledit traitement de surface est réalisé par application sur lesdites surfaces d'outils de production ou installations, pendant une période de temps prédéterminée comprise entre 1 minute et 1 heure, d'une solution préalablement formée comprenant ladite composition et une phase aqueuse de dilution.

4. Utilisation suivant la revendication 3, dans laquelle ledit traitement de surface est associé à une étape d'abrasion mécanique desdites surfaces d'outils de production ou d'installations avec ladite solution.

5. Utilisation suivant l'une quelconque des revendications 1 à 4, dans laquelle ledit traitement de surface comprend une étape de rinçage et/ou de séchage desdites surfaces d'outils de production ou d'installations.

6. Utilisation suivant l'une quelconque des revendications 1 à 5, dans laquelle ledit traitement de surface comprend en outre une étape supplémentaire de traitement desdites surfaces d'outils de production ou d'installations à l'aide d'un biocide.

## Patentansprüche

1. Verwendung einer Zusammensetzung zur Entfernung von Biofilmen, die zumindest einen waschaktiven Bestandteil, der ein Benetzungsmittel und ein Dispersionsmittel umfasst, und zumindest einen enzymatischen Bestandteil, der zumindest eine Protease, zumindest eine Laccase und zumindest eine Polysaccharidase enthält, umfasst, wobei die besagte Verwendung eine Oberflächenbehandlung von Produktionswerkzeugen oder Förder- und/oder Produktions- und/oder Verpackungsanlagen umfasst, mit denen verderbliche Nahrungsmittel in Kontakt kommen, um die Lebensdauer dieser verderblichen Nahrungsmittel bis zu 50 %, bevorzugt bis zu 60 %, bevorzugt bis zu 75 % zu erhöhen.

2. Verwendung nach Anspruch 1, worin der besagte waschaktive Bestandteil unter anderem einen Komplexbildner umfasst.

3. Verwendung nach einem der Ansprüche 1 oder 2, worin besagte Oberflächenbehandlung durch Aufbringen auf besagte Flächen von Produktionswerkzeugen oder Anlagen über eine vorbestimmte Zeitspanne zwischen 1 Minute und 1 Stunde einer zuvor gebildeten Lösung, die besagte Zusammensetzung und eine wässerige Verdünnungsphase umfasst, durchgeführt wird.

4. Verwendung nach Anspruch 3, worin besagte Oberflächenbehandlung mit einer Etappe des mechanischen Abriebs besagter Oberflächen von Produktionswerkzeugen oder Anlagen mit besagter Lösung verbunden ist.

5. Verwendung nach einem der Ansprüche 1 bis 4, worin besagte Oberflächenbehandlung eine Etappe des Spülens und/oder des Trocknens besagter Oberflächen von Produktionswerkzeugen oder Anlagen umfasst.

6. Verwendung nach einem der Ansprüche 1 bis 5, worin besagte Oberflächenbehandlung unter anderem eine zusätzliche Etappe der Behandlung besagter Oberflächen von Produktionswerkzeugen oder Anlagen mithilfe eines Biozids umfasst.

## Claims

1. Use of a composition for removing biofilms comprising at least one detergent component comprising a wetting agent and a dispersing agent, and at least one enzymatic component comprising at least one protease, at least one laccase and at least one polysaccharidase, said use comprising a treatment of surface, production tools or conveying facilities and/or production facilities and/or packaging facilities, with which perishable goods come into contact, for increasing the shelf life of said perishable goods up to 50%, preferable up to 60%, preferentially up to 75%.

2. Use according to claim 1, in which said detergent component further comprising a sequestering agent.

3. Use according to claim 1 or 2, in which said treatment of surface is carried out by applying on said surface production tools or facilities, for a predetermined time period comprised between 1 minute and 1 hour, a solution comprising said composition and a dilution aqueous phase formed beforehand.

4. Use according to claim 3, in which said treatment of surface is associated with a step for mechanical abrasion of said surface production tools or facilities with said solution.

5. Use according to any of claims 1 to 4, in which said treatment of surface comprises a step of rinsing and/or drying of said surfaces production tools or facilities.

6. Use according to any of claims 1 to 5, in which said treatment of surface further comprises an additional step of treatment of said surfaces production tools or facilities by means of a biocide.
